# EUROPÄISCHE PATENTSCHRIFT

(11) **EP 1 286 073 B1**
(45) Veröffentlichungstag und Bekanntmachung des Hinweises auf die Patenterteilung: **28.12.2005**
(21) Anmeldenummer: 02014752.6
(22) Anmeldetag: 04.07.2002
(51) Int. Cl.: F16D 23/06

(54) **Spielfreie Klauenkupplung**
Zero backlash dog clutch
Mécanisme d'accouplement à crabots sans jeu

(30) Priorität: 23.08.2001 DE 10141275
(43) Veröffentlichungstag der Anmeldung: 26.02.2003
(73) Patentinhaber: Bayerische Motoren Werke Aktiengesellschaft, 80809 München (DE)
(72) Erfinder: Körber, Martin, 85375 Neufahrn (DE)

(56) Entgegenhaltungen:
- EP-A- 0 721 072
- EP-A- 0 744 557
- BE-A- 462 310
- JP-A- 9 257 054
- US-A- 3 548 983
- US-A- 5 785 162

## Beschreibung

Die vorliegende Erfindung betrifft eine Getriebeschaltvorrichtung gemäß dem Oberbegriff des Patentanspruches 1.
Eine derartige Getriebeschaltvorrichtung ist aus der US 785 162 bekannt.
Aus der DE 39 39 274 C1 ist ein Getriebe bekannt, bei dem ein erstes und ein zweites schaltbares Zahnrad drehbar auf einer Eingangswelle gelagert sind. Zwischen den beiden Zahnrädern ist eine Festmuffe angeordnet, die drehfest mit der Eingangswelle verbunden ist. Auf der Festmuffe ist axial verschieblich eine Schiebemuffe angeordnet, die drei Schaltstellungen einnehmen kann, nämlich eine Mittel- bzw. Neutralstellung sowie eine erste bzw. zweite Schaltstellung, in der das erste bzw. zweite Zahnrad über die Schiebemuffe und die Festmuffe drehfest mit der Welle verbunden ist.

In Wechselgetrieben ohne Planetenradsätzen werden, wie es beispielsweise in der oben genannten DE 39 39 274 C1 erläutert ist, ein Gang geschaltet, indem eine formschlüssige Verbindung zwischen einem Zahnrad und der zugeordneten Welle hergestellt wird. Ist die Verbindung zwischen dem Zahnrad und der Welle geschlossen, so kann über diesen "Pfad" ein Drehmoment übertragen werden. Ein derartiges "Verbindungselement" weist ein Innenteil bzw. eine Festmuffe auf, mit einer Außenverzahnung mit in Achsrichtung angeordneten Zähnen, sowie ein axial verschiebliches Außenteil bzw. eine Schiebemuffe mit einer Innenverzahnung mit ebenfalls in Achsrichtung ausgerichteten Zähnen. Das Innenteil und das Außenteil sind stets in Eingriff. Durch axiales Verschieben der Schiebemuffe kann ein Zahnrad zugeschaltet werden, das heißt, in Drehrichtung formschlüssig über die Festmuffe mit der Welle verbunden werden.

Bei der Auslenkung aus der Neutralstellung wird die Schiebemuffe so weit in axialer Richtung bewegt, dass sie einerseits immer noch mit der Festmuffe in Eingriff steht, andererseits aber auch mit ihrer Innenverzahnung in die zugeordnete Verzahnung des "anzukoppelnden" Bauteils eintaucht.

Zur Erleichterung dieses "Einspurvorganges" ist bei der oben genannten DE 39 39 274 C1 die Innenverzahnung des Außenteils, das heißt der Schiebemuffe und die Außenverzahnung des "anzukoppelnden" Zahnrades mit in Achsrichtung angespitzten bzw. abgeschrägten Zähnen versehen.

Um bei Handschaltgetrieben ein selbsttätiges "Herausspringen" eines eingelegten Ganges zu verhindern, sind an den Verzahnungen der Schiebemuffe und des betrachteten Zahnrades sogenannte "Hinterlegungsschrägen" angebracht. Diese bewirken, dass die beiden drehgekoppelten Bauteile bei einer Drehmomentenbelastung in axialer Richtung zusammengezogen werden, wodurch ein Herausspringen des Ganges verhindert wird.

Die an den "Schaltverzahnungen" der Schiebemuffe und des damit drehgekoppelten Zahnrades vorgesehenen Hinterlegungsschrägen führen jedoch bei herkömmlichen Getrieben dazu, dass bei eingelegtem Gang ein gewisses Maß an Verdrehspiel zwischen den gekoppelten Bauteilen besteht. Im Bereich der Lastumkehr, d.h. beim Wechsel zwischen Zug- und Schubbetrieb, macht sich bei einem Handschaltgetriebe bei eingelegtem Gang das Verdrehspiel durch Klapper- bzw. Klackergeräusche bemerkbar, was hinsichtlich des Fahrkomforts unerwünscht ist.

Aufgabe der Erfindung ist es, eine Getriebeschaltvorrichtung zu schaffen, die bei eingelegtem Gang im "Null- bzw. Niedriglastbetrieb" kein Verdrehspiel aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Getriebeschaltvorrichtung mit zwei Getriebedrehkörpern, die jeweils eine miteinander in Eingriff bringbare Schaltverzahnung aufweisen, wobei an einem der beiden Getriebedrehkörper "Zentrierelemente" vorgesehen sind. Bei eingelegtem Gang, das heißt, wenn die beiden Schaltverzahnungen ineinandergreifen und das Getriebe im Null- bzw. Niedriglastbetrieb läuft, greifen die Zentrierelemente des einen Getriebedrehkörpers formschlüssig in die Schaltverzahnung des anderen Getriebedrehkörpers ein. "Formschlüssig" bedeutet in diesem Zusammenhang, dass die beiden Getriebedrehkörper im Null- bzw. Niedriglastbetrieb in Drehrichtung spielfrei miteinander gekoppelt sind.

Da die beiden Schaltverzahnungen im Null- bzw. Niedriglastbetrieb des Getriebes, das heißt wenn das Getriebe nur ein geringes Drehmoment überträgt, spielfrei ineinandergreifen, ergibt sich eine sehr geringe Geräuschentwicklung.

Bei modernen Schaltgetrieben sind die Zahnspitzen üblicherweise abgeschrägt, d.h. angespitzt. Gemäß der Erfindung wird bei eingelegtem Gang im Null- bzw. Niedriglastbetrieb eine Axialkraft auf die Schaltmuffe ausgeübt, was dazu führt, dass die Zahnspitzen des einen Getriebedrehkörpers gegen die Zentrierelemente des anderen Getriebedrehkörpers gedrückt werden. Die Zentrierelemente können beispielsweise abgeschrägte, zahnartige Elemente sein. Alternativ dazu können die Zentrierelemente auch rillenartige Vertiefungen sein, in die die Zahnspitzen eingreifen.

Nach einer Weiterbildung der Erfindung sind die Zentrierelemente an einem zuschaltbaren Zahnrad angeordnet. Im Null- bzw. Niedriglastbetrieb greifen dann bei eingelegtem Gang, das heißt wenn die Innenverzahnung der Schiebemuffe in die Außenverzahnung des zugeschalteten Zahnrades eingreift, die Zahnspitzen der Schiebemuffenverzahnung in die Zentrierelemente des Zahnrades ein.

Nach einer Weiterbildung der Erfindung sind in Umfangsrichtung mehrere zahnartige Zentrierelemente vorgesehen. In Umfangsrichtung aufeinanderfolgende Zentrierelemente können dabei mehrere Verzahnungszähne voneinander beabstandet angeordnet sein.

Im folgenden wird die Erfindung anhand von Ausführungsbeispielen im Zusammenhang mit der Zeichnung näher erläutert. Es zeigen:
- Figuren 1-3: die drei Schaltstellungen eines Zweiganggetriebes gemäß dem Stand der Technik in schematischer Darstellung;
- Figuren 4, 5: abgewickelte Darstellungen der Schaltverzahnungen einer Getriebeanordnung gemäß dem Stand der Technik in Leerlauf- bzw. Eingriffsstellung;
- Figur 6: eine Getriebeanordnung gemäß der Erfindung in Leerlauf- bzw. Neutralstellung;
- Figur 7: ein Ausführungsbeispiel mit "geteilten Zentrierzähnen" im Null- bzw. Niedriglastbetrieb;
- Figur 8: die Getriebeanordnung der Figur 7 im Lastbetrieb; und
- Figur 9, 10: eine Variante der Erfindung mit Zentrierrillen im Nulllastbetrieb bzw. im Lastbetrieb.

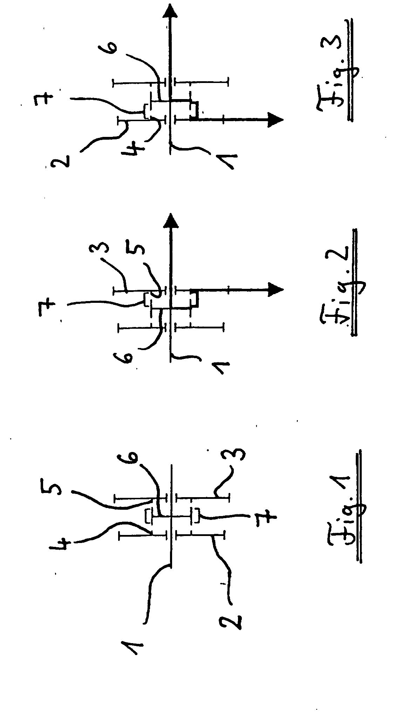

**Figur 1** zeigt ein Zweigangschaltgetriebe mit einer Welle 1 auf der drehbar zwei Zahnräder 2, 3 angeordnet sind. Die Zahnräder 2, 3 weisen jeweils eine Schaltverzahnung 4, 5 auf. Drehfest mit der Welle 1 ist eine Festmuffe 6 verbunden. Auf der Festmuffe 6 ist eine Schiebemuffe 7 angeordnet. Die Schiebemuffe 7 ist drehfest aber axial verschieblich mit der Festmuffe 6 verbunden. In der in Figur 1 gezeigten Mittel- bzw. Neutralstellung der Schiebemuffe 7 sind die beiden Zahnräder 2, 3 frei auf der Welle 1 drehbar.

In der in **Figur 2** gezeigten ersten Schaltstellung ist die Schiebemuffe 7 "nach rechts" verschoben. Die Schiebemuffe 7 greift weiterhin in eine Außenverzahnung der Festmuffe 6 ein und hier zusätzlich in die Schaltverzahnung 5 des Zahnrades 3. Das Zahnrad 3 ist somit über die Schiebemuffe 7 und die Festmuffe 6 drehfest mit der Welle 1 gekoppelt.

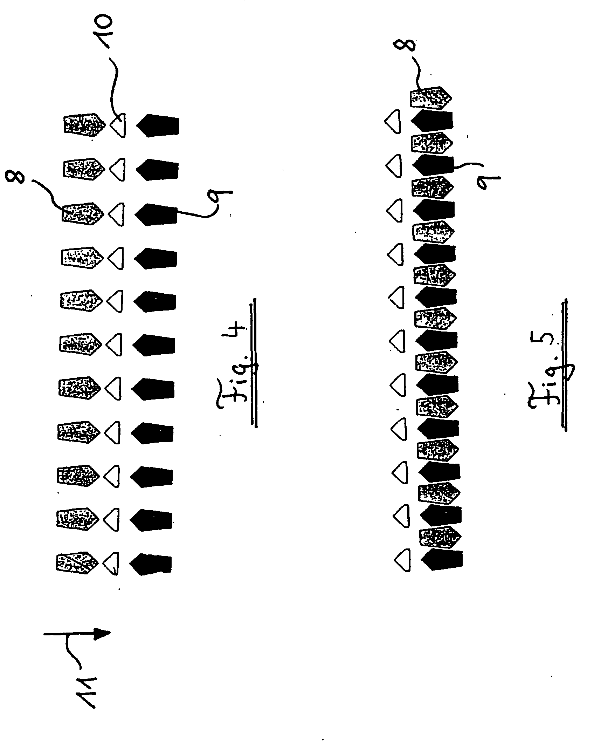

In **Figur 3** ist eine zweite Schaltstellung dargestellt, in der die Schiebemuffe 7 in die Schaltverzahnung 4 des Zahnrades 2 eingreift. Hier ist das Zahnrad 2 über die Schiebemuffe 7 und die Festmuffe 6 drehfest mit der Welle 1 verbunden.

Die **Figuren 4 und 5** zeigen die Schaltverzahnungen in abgewickelter Darstellung.

In **Figur 4** befindet sich das Getriebe in Neutralstellung. Eine Schaltverzahnung 8 der Schiebemuffe steht hier nicht in Eingriff mit einer Schaltverzahnung 9 eines Zahnrades. Die Schiebemuffe und das Zahnrad sind also nicht drehgekoppelt. Zwischen der Schiebemuffe und dem Zahnrad ist in bekannter Weise (vgl. 39 39 274 C2) ein Synchronring mit einer zugeordneten Synchronverzahnung 10 angeordnet.

Die Schaltverzahnung 8 der Schiebemuffe ist in axialer Richtung 11 in die Schaltverzahnung 9 einschiebbar. Zur Verbesserung des Schaltkomforts sind die Zahnspitzen der Schaltverzahnungen 8, 9 und der Synchronverzahnung 10 abgeschrägt bzw. "angespitzt".

**Figur 5** zeigt die Getriebeschaltvorrichtung bei eingelegtem Gang. Hier ist die Schaltverzahnung 8 über den Synchronring in die Schaltverzahnung 9 eingeschoben. Es ist zu erkennen, dass zwischen den beiden Schaltverzahnungen 8, 9 ein gewisses Spiel vorhanden ist, worauf später noch näher eingegangen wird.

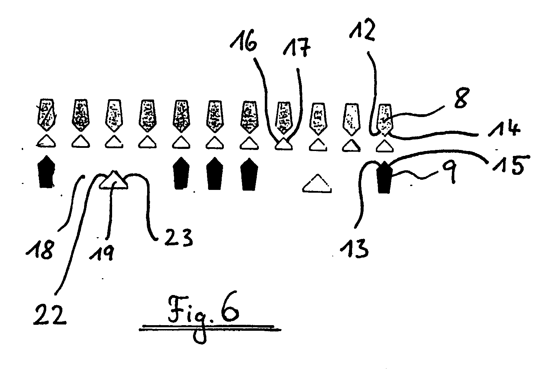

**Figur 6** zeigt ein erstes Ausführungsbeispiel einer Getriebeschaltvorrichtung gemäß der Erfindung in Leerlauf- bzw. Neutralstellung. Die Schaltver zahnungen 8, 9 weisen hier ebenfalls abgeschrägte Zahnenden auf, mit ersten Schrägen 12, 13 und zweiten Schrägen 14, 15. Die Synchronverzahnung weist ebenfalls an jeder Zahnspitze eine erste Schräge 16 und eine zweite Schräge 17 auf. Die Schaltverzahnung 9 weist in Umfangsrichtung Zahnlückenbereiche 18 auf, in denen Zentrierelemente 19 vorgesehen sind. Die Zahnlückenbereiche 18 sind fertigungsbedingt, für die Funktion aber nicht unbedingt erforderlich. Die Zentrierelemente 19 sind hier dreieckförmige zahnartige Elemente mit jeweils einer ersten Zentrierschräge 22 und einer zweiten Zentrierschräge 23.

Beim Einschieben der Schaltverzahnung 8 in die Schaltverzahnung 9 liegen im Null- bzw. Niedriglastbetrieb die Zentrierschrägen 22, 23 an der ersten und zweiten Schräge 12, 14 des in Abhängigkeit von der Drehstellung der Schaltverzahnung 8 zugeordneten "Zahnpaares" an. Durch eine hier nicht dargestellte "Einrichtung" wird eine geringe axiale Anliegekraft aufgebracht, mit der die Schaltverzahnung 8, gegen die Zentrierelemente 19 drückt. Da die Schaltverzahnung 8 im Null- bzw. Niedriglastbetrieb formschlüssig an den Zentrierelementen 19 anliegt, besteht eine spielfreie Kopplung in Drehrichtung, was hinsichtlich der Geräuschemission sehr günstig ist.

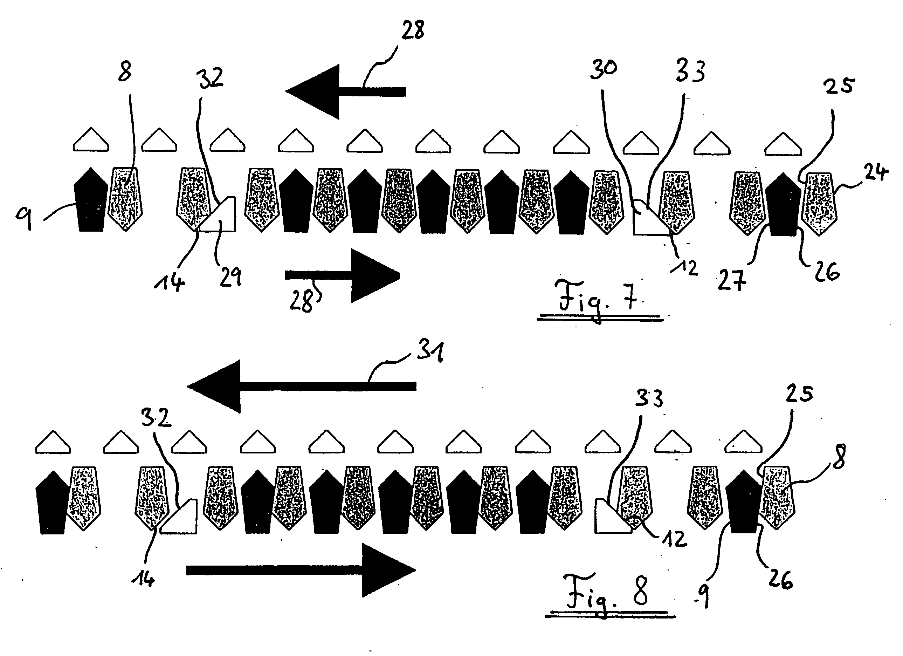

Die **Figuren 7 und 8** zeigen ein zweites Ausführungsbeispiel der Erfindung. In **Figur 7** ist eine Eingriffsstellung im Null- bzw. Niedriglastbetrieb dargestellt und in **Figur 8** eine Eingriffsstellung im Lastbetrieb.

In dem hier gezeigten großen Maßstab ist die Zahnform der Schaltverzahnungen 8, 9 besser zu erkennen. Die Zähne der Schaltverzahnungen 8, 9 weisen jeweils einen Bereich auf, in dem die Zahnbreite zur Zahnspitze hin zunimmt. Diese Zahnbereiche bilden sogenannte "Hinterlegungsschrägen", die den Zweck haben, dass, wie am besten aus **Figur 8** ersichtlich ist, der eingelegte Gang im Lastbetrieb nicht selbsttätig herausspringen kann. Im Lastbetrieb liegen nämlich einander zugewandte Hinterlegungsschrägen 25, 26 aneinander an. Aufgrund der Schrägstellung der Hinterlegungsschrägen 25, 26 werden die beiden Schaltverzahnungen 8, 9 in Axialrichtung "zusammengezogen".

Im Null- bzw. Niedriglastbetrieb, was in **Figur 7** durch die kurzen Drehmomentpfeile 28 angedeutet ist, wird die Schaltverzahnung 8 durch eine hier nicht dargestellte Einrichtung in axialer Richtung gegen Zentrierelemente 29, 30 gedrückt, die jeweils eine Zentrierschräge 32, 33 aufweisen. Die erste Schräge 12 der Schaltverzahnung 8 liegt dann an der Zentrierschräge 33 an und gleichzeitig liegt die zweite Schräge 14 der Schaltverzahnung 8 an der Zentrierschräge 32 an.

Im Lastbetrieb, was in **Figur 8** durch die längeren Drehmomentpfeile 31 angedeutet ist, sind die Schaltverzahnungen 8, 9 geringfügig gegenüber der in **Figur 7** gezeigten Stellung versetzt. Hier liegen die Hinterlegungsschrägen 25, 26 aneinander an. Die Schaltverzahnungen 8, 9 sind gegenüber der Null- bzw. Niedriglaststellung der **Figur 8** geringfügig "auseinandergeschoben". Im Lastbetrieb liegen nur noch die ersten Schrägen 12 der Schaltverzahnung 8 an den zugeordneten Zentrierschrägen 33 an. Zwischen den zweiten Schrägen 14 und den Zentrierschrägen 32 hingegen besteht ein kleines Spiel. Dieses Spiel ist jedoch hinsichtlich der Geräuschemission unproblematisch, da im Lastbetrieb die Schaltverzahnungen 8, 9 an den Hinterlegungsschrägen 25, 26 formschlüssig anliegen.

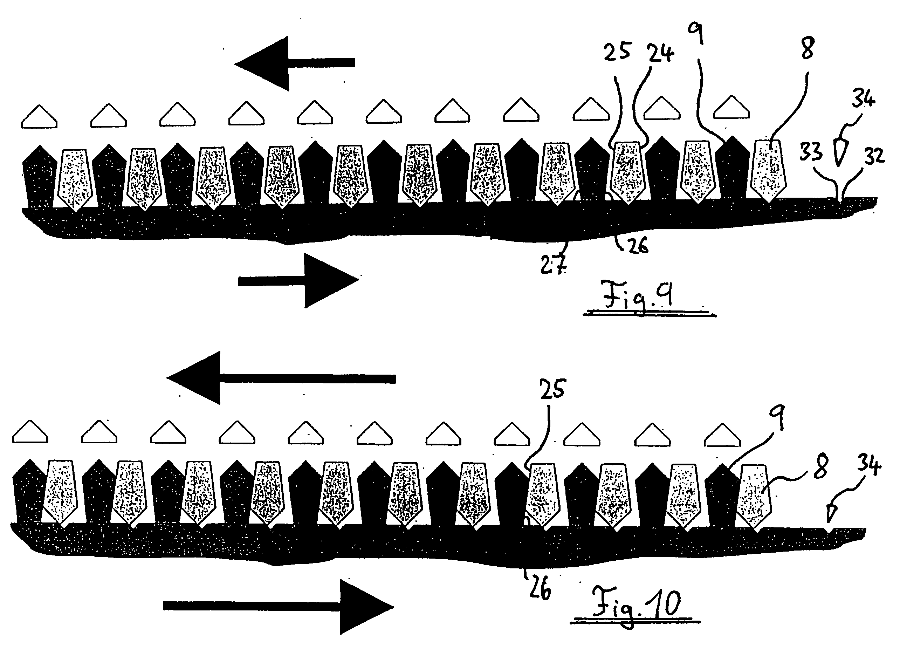

Die **Figuren 9, 10** zeigen ein drittes Ausführungsbeispiel gemäß der Erfindung. Im Unterschied zu den Figuren 6 - 8 sind hier keine "zahnartigen" Zentrierelemente vorgesehen, sondern "Zentrierrillen" mit einer ersten Zentrierschräge 32 und einer zweiten Zentrierschräge 33. In **Figur 9** sind die Schaltverzahnungen 8, 9 entsprechend **Figur 7** in ihrer Null- bzw. Niedriglaststellung dargestellt, in der die Zahnspitzen der Schaltverzahnung 8 in die Zentrierrillen 34 gedrückt werden und formschlüssig eingreifen, wobei zwischen den Hinterlegungsschrägen 24 - 27 ein Spiel vorhanden ist.

In **Figur 10** befinden sich die Schaltverzahnungen 8, 9 in ihrer Laststellung. Es ist zu erkennen, dass die Schaltverzahnungen 8, 9 hier etwas auseinandergerückt sind. Das heißt, die Zahnspitzen der Schaltverzahnung 8 greifen hier nicht mehr voll in die Zentrierrillen 34 ein. Im Unterschied zu Figur 9 liegen hier jedoch die einander zugewandten Hinterlegungsschrägen 25, 26 aneinander an.

## Patentansprüche

1. Getriebeschaltvorrichtung mit
einem ersten relativ zu einer Welle drehbar angeordneten Getriebedrehkörper, der eine erste Verzahnung aufweist,
einem zweiten Getriebedrehkörper, der axial verschieblich ist und der eine zweite Verzahnung aufweist, die durch axiales Verschieben in Eingriff mit der ersten Verzahnung bringbar ist, wobei
an Zahnspitzen mindestens einer der beiden Verzahnungen Schrägen vorgesehen sind, wobei
an einem der beiden Getriebedrehkörper Zentrierelemente (19, 29, 30, 34) vorgesehen sind, die in einer Eingriffsstellung der beiden Verzahnungen (8, 9) im Niedriglastbetrieb an den Schrägen (12, 14) anliegen,
**dadurch gekennzeichnet, dass**
die Verzahnungen (8, 9) im Lastbetrieb gegenüber dem Niedriglastbetrieb geringfügig in axialer Richtung auseinandergerückt und in Drehrichtung geringfügig verdreht sind und zwar so, dass nur ein Teil (30) der Zentrierelemente (29, 30) an den zugeordneten Schrägen (12) anliegt.

2. Getriebeschaltvorrichtung nach Anspruch 1, **dadurch gekennzeichnet, dass** die Zahnspitzen jeweils eine erste Schräge (12) und eine zweite Schräge (14) aufweisen, die pfleilartig zusammenlaufen und dass mindestens zwei Zentrierelemente (19; 29, 30) vorgesehen sind, wobei ein erstes Zentrierelement (30) den ersten Schrägen (12) und ein zweites Zentrierelement (29) den zweiten Schrägen (14) zugeordnet ist.

3. Getriebeschaltvorrichtung nach Anspruch 2, **dadurch gekennzeichnet, dass** in einer Eingriffsstellung im Null- bzw. Niedriglastbetrieb das erste Zentrierelement (30) an einer der ersten Schrägen (12) anliegt und gleichzeitig das zweite Zentrierelement (29) an einer der zweiten Schrägen (14) anliegt, so dass die beiden Getriebedrehkörper (8, 9) in Drehrichtung spielfrei gekoppelt sind.

4. Getriebeschaltvorrichtung nach einem der Ansprüche 1 bis 3, **dadurch gekennzeichnet, dass** die Zähne der beiden Verzahnungen einen Zahnabschnitt aufweisen, in dem die Zahnbreite in Richtung zu den Zahnspitzen hin zunimmt, wobei die Flanken dieser Zahnabschnitte Hinterlegungsschrägen (24 - 27) bilden, und wobei in einer Eingriffsstellung im Lastbetrieb Hinterlegungsschrägen (26) der ersten Verzahnung an zugewandten Hinterlegungsschrägen (25) der zweiten Verzahnung (8) anliegen.

5. Getriebeschaltvorrichtung nach einem der Ansprüche 1 bis 4, **dadurch gekennzeichnet, dass** die Zentrierelemente abgeschrägte Zentrierzähne (19, 29, 30) sind.

6. Getriebeschaltvorrichtung nach einem der Ansprüche 1 bis 4, **dadurch gekennzeichnet, dass** die Zentrierelemente rillenartige Vertiefungen (34) sind.

7. Getriebeschaltvorrichtung nach einem der Ansprüche 1 bis 6, **dadurch gekennzeichnet, dass** die Zentrierelemente (19, 29, 30, 34) an dem ersten Getriebedrehkörper angeordnet sind.

8. Getriebeschaltvorrichtung nach einem der Ansprüche 1 bis 7, **dadurch gekennzeichnet, dass** in Umfangsrichtung aufeinanderfolgende Zentrierelemente (19, 29, 30, 34) mehrere Verzahnungszähne weit voneinander beabstandet sind.

9. Getriebeschaltvorrichtung nach einem der Ansprüche 1 bis 8, **dadurch gekennzeichnet, dass** eine Andrückeinrichtung vorgesehen ist, die in einer Eingriffsstellung im Null- bzw. Niedriglastbetrieb eine Axialkraft erzeugt, welche die Schrägen (12, 14) gegen die Zentrierelemente (19, 29, 30, 34) drückt.

10. Getriebeschaltvorrichtung nach einem der Ansprüche 1 bis 9, **dadurch gekennzeichnet, dass** die Andrückeinrichtung ein Federelement aufweist, das im Schaltpfad zwischen einem Schalthebel und dem zweiten Getriebedrehkörper (7) angeordnet ist.

11. Getriebeschaltvorrichtung nach einem der Ansprüche 1 bis 10, **dadurch gekennzeichnet, dass** der erste Getriebedrehkörper (2, 3) ein auf einer Welle (1) gelagertes Zahnrad ist,
der zweite Getriebedrehkörper (7) eine Schiebemuffe ist, die drehfest und axial verschieblich auf einer Festmuffe (6) angeordnet ist, welche fest mit der Welle (1) verbunden ist und dass zwischen der Schiebemuffe (7) und dem Zahnrad (3, 4) ein Synchronring (10) angeordnet ist.

12. Getriebeschaltvorrichtung nach einem der Ansprüche 1 bis 10, **dadurch gekennzeichnet, dass** der erste Getriebedrehkörper (2, 3) ein erstes auf einer Welle (1) gelagertes Zahnrad ist,
der zweite Getriebedrehkörper (7) eine Schiebemuffe ist, die drehfest und axial verschieblich auf einem zweiten auf der Welle (1) gelagerten Zahnrad angeordnet ist.

## Claims

1. A gear-shift device comprising
- a first rotary member disposed so as to be rotatable relative to a shaft and having a first set of teeth and
- a second rotary member which is axially movable and has a second set of teeth adapted to be brought into engagement with the first set of teeth by axial displacement, wherein
- the tips of at least one of the two sets of teeth are sloped, wherein
- centring elements (19, 29, 30, 34) are provided on one of the two rotary members and abut the slopes (12, 14) when the two sets of teeth (8, 9) are in an engaged position during low-load operation,
**characterised in that**
- during operation under load, as opposed to low-load operation, the teeth (8, 9) are moved slightly apart in the axial direction and are slightly rotated in the direction of rotation so that only a part (30) of the centring elements (29, 30) abuts the associated slopes (12).

2. A gear-shift device according to claim 1, **characterised in that** the tooth tips each have a first slope (12) and a second slope (14), the slopes running together like an arrow, and at least two centring elements (19; 29, 30) are provided, wherein a first centring element (30) is associated with the first slopes (12) and a second centring element (29) is associated with the second slopes (14).

3. A gear-shift device according to claim 2, **characterised in that** in an engagement position during idling or low-load operation, the first centring element (30) abuts one of the first slopes (12) and simultaneously the second centring element (29) abuts one of the second slopes (14), so that the two rotary members (8, 9) are coupled without clearance in the direction of rotation.

4. A gear-shift device according to any of claims 1 to 3, **characterised in that** the teeth in each set have a portion in which the width of the tooth increases towards the tips, wherein the flanks of the said tooth portions form undercut slopes (24 - 27) and wherein in an engaged position under load the undercut slopes (26) of the first teeth abut associated undercut slopes (25) on the second teeth (8).

5. A gear-shift device according to any of claims 1 to 4, **characterised in that** the centring elements are bevelled centring teeth (19, 29, 30).

6. A gear-shift device according to any of claims 1 to 4, **characterised in that** the centring elements have groove-like recesses (34).

7. A gear-shift device according to any of claims 1 to 6, **characterised in that** the centring elements (19, 29, 30, 34) are disposed on the first rotary member.

8. A gear-shift device according to any of claims 1 to 7, **characterised in that** successive centring elements (19, 29, 30, 34) in the peripheral direction are separated by a number of teeth.

9. A gear-shift device according to any of claims 1 to 8, **characterised by** a pressure device which, in an engagement position in idling or low-load operation, generates an axial force which presses the slopes (12, 14) against the centring element (19, 29, 30, 34).

10. A gear-shift device according to any of claims 1 to 9, **characterised in that** the pressure device comprises a spring element disposed in the path between a gear shift lever and the second rotary member (7).

11. A gear-shift device according to any of claims 1 to 10, **characterised in that** the first rotary member (2, 3) is a gearwheel mounted on a shaft (1), and
the second rotary member (7) is a sliding sleeve which is co-rotatably and axially movably disposed on a fixed sleeve (6) which is rigidly connected to the shaft (1), and a synchronising ring (10) is disposed between the sliding sleeve (7) and the gearwheel (3, 4).

12. A gear-shift device according to any of claims 1 to 10, **characterised in that** the first rotary member (2, 3) is a first gearwheel mounted on a shaft (1), and the second rotary member (7) is a sliding sleeve disposed co-rotatably and axially movably on a second gearwheel mounted on the shaft (1).

## Revendications

1. Dispositif de changement de vitesse comportant :
un premier corps rotatif de boîte de vitesses qui peut tourner par rapport à un arbre et est muni d'une première denture,
un deuxième corps rotatif de boite de vitesses mobile axialement et muni d'une deuxième denture qui peut s'engrener avec la première denture par déplacement axial,
des biseaux étant prévus sur les pointes des dents d'au moins une des deux dentures et sur l'un des deux corps rotatifs d'engrenage sont prévus des éléments de centrage (19, 29, 30, 34) qui s'appliquent sur les biseaux (12, 14) en fonctionnement à faible charge quand les deux dentures (8, 9) sont en position d'engrènement,
**caractérisé en ce qu'**
en fonctionnement de charge par rapport au fonctionnement à faible charge, les dentures (8, 9) sont légèrement écartées en direction axiale et sont légèrement tournées en direction de rotation de manière que seule une partie (30) des éléments de centrage (29, 30) s'applique contre les biseaux (12) associés.

2. Dispositif de changement de vitesse selon la revendication 1,
**caractérisé en ce que**
les pointes des dents présentent chacune un premier biseau (12) et un deuxième biseau (14) se rapprochant à la manière d'une flèche et on prévoit au moins deux éléments de centrage (19 ; 29, 30) dont un premier élément de centrage (30) est associé aux premiers biseaux (12) et un deuxième élément de centrage (29) aux deuxièmes biseaux (14).

3. Dispositif de changement de vitesse selon la revendication 2,
**caractérisé en ce que**
dans une position d'engrènement en fonctionnement à faible charge ou sans charge, le premier élément de centrage (30) s'applique sur l'un des premiers biseaux (12) et en même temps le deuxième élément de centrage (29) s'applique sur l'un des deuxièmes biseaux (14), de sorte que les deux corps rotatifs de boîte de vitesses (8, 9) sont couplés sans jeu dans le sens de rotation.

4. Dispositif de changement de vitesse selon l'une des revendications 1 à 3,
**caractérisé en ce que**
les dents des deux dentures présentent chacune un segment ayant ont une largeur qui augmente vers les pointes de dent, les flancs de ces segments de dents formant des biseaux de contact arrière (24 à 27) et, dans une position d'engrènement en fonctionnement de charge, les biseaux de contact arrière (26) de la première denture s'appliquent sur les biseaux de contact arrière (25), tournés vers eux, de la deuxième denture (8).

5. Dispositif de changement de vitesse selon l'une des revendications 1 à 4,
**caractérisé en ce que**
les éléments de centrage sont des dents de centrage (19, 29, 30) biseautées.

6. Dispositif de changement de vitesse selon l'une des revendications 1 à 4,
**caractérisé en ce que**
les éléments de centrage sont des renfoncements (34) en forme de rainures.

7. Dispositif de changement de vitesse selon l'une des revendications 1 à 6,
**caractérisé en ce que**
les éléments de centrage (19, 29, 30, 34) sont placés sur le premier corps rotatif de boite de vitesses.

8. Dispositif de changement de vitesse selon l'une des revendications 1 à 7,
**caractérisé en ce que**
des éléments de centrage (19, 29, 30, 34) successifs en direction périphérique sont éloignés l'un de l'autre de plusieurs dents d'endentement.

9. Dispositif de changement de vitesse selon l'une des revendications 1 à 8,
**caractérisé en ce qu'**
on prévoit une installation de compression qui, en position d'engrènement en fonctionnement à faible charge ou sans charge, produit une force axiale qui pousse les biseaux (12, 14) contre les éléments de centrage (19, 29, 30, 34).

10. Dispositif de changement de vitesse selon l'une des revendications 1 à 9,
**caractérisé en ce que**
l'installation de compression présente un élément élastique placé sur le trajet d'embrayage entre un levier de vitesse et le deuxième corps rotatif d'engrenage (7).

11. Dispositif de changement de vitesse selon l'une des revendications 1 à 10,
**caractérisé en ce que**
le premier corps rotatif de boîte de vitesses (2,3) est une roue dentée montée sur un arbre (1), le deuxième corps rotatif de boîte de vitesses est un manchon coulissant placé de façon à être solidaire en rotation et mobile axialement sur un manchon fixe (6) relié à demeure à l'axe (1) et une bague de synchronisation (10) est placée entre le manchon coulissant (7) et la roue dentée (3, 4).

12. Dispositif de changement de vitesse selon l'une des revendications 1 à 10,
**caractérisé en ce que**
le premier corps rotatif de boîte de vitesses (2, 3) est une première roue dentée montée sur un arbre (1), le deuxième corps rotatif de boîte de vitesses (7) est un manchon coulissant placé de façon à être solidaire en rotation et mobile axialement sur une deuxième roue dentée montée sur l'arbre (1).
